# EUROPEAN PATENT APPLICATION

(11) **EP 2 381 525 A1**
(43) Date of publication of application: **26.10.2011**
(21) Application number: 09838224.5
(22) Date of filing: 16.11.2009
(51) Int. Cl.: H01M 10/50, H01G 9/00, H01G 9/155, H01M 2/10

(54) **ELECTRICAL STORAGE DEVICE**

(30) Priority: 16.01.2009 JP 2009008061
(71) Applicant: Toyota Jidosha Kabushiki Kaisha, Toyota-shi, Aichi 471-8571 (JP)
(72) Inventor: TAKAHASHI, Kenji, Toyota-shi Aichi 471-8571 (JP); FUJII, Shunsuke, Toyota-shi Aichi 471-8571 (JP)
(74) Representative: TBK
(86) International application number: PCT/JP2009/006110
(87) International publication number: WO 2010/082254

(57) **Abstract**

[PROBLEMS] To provide a power storage apparatus having a configuration including a plurality of power storage components arranged side by side, wherein, even when the temperature suddenly rises in any of the power storage components, the transfer of the heat to the other power storage components placed adjacently to that component can be suppressed.

[SOLVING MEANS] A power storage apparatus includes a plurality of power storage components (10) arranged side by side in a predetermined direction (X direction), and a spacer (20) located between the power storage components adjacent in the predetermined direction and in contact with the power storage components. The spacer has a base material (22) formed of resin and a blowing agent (23) held by the base material and thermally decomposed in response to a temperature rise associated with heat generation of the power storage component.

## Description

### TECHNICAL FIELD

The present invention relates to a power storage apparatus in which a plurality of power storage components are arranged side by side in one direction with a spacer interposed between the power storage components.

### BACKGROUND ART

In using a secondary battery as the power source of a vehicle, a battery module formed of a plurality of secondary batteries (cells) is mounted on the vehicle. Specifically, the plurality of cells constituting the battery module are connected electrically in series to allow output of energy necessary for the running of the vehicle. An exemplary battery module includes a plurality of cells arranged side by side in one direction. Specifically, the plurality of cells having square shape are arranged side by side with a spacer interposed between the adjacent ones of them, and the plurality of cells and the spacers are sandwiched between end plates placed at both ends in the arrangement direction. The spacers are provided for preventing the two cells adjacent in the arrangement direction from coming into contact with each other.

### PRIOR ART DOCUMENTS

### PATENT DOCUMENTS

[Patent Document 1] Japanese Patent Laid-Open No. 2002-042753
[Patent Document 2] Japanese Patent Laid-Open No. 2002-134078
[Patent Document 3] Japanese Patent Laid-Open No. 2004-362879
[Patent Document 4] Japanese Patent Laid-Open No. 2000-323187
[Patent Document 5] Japanese Patent Laid-Open No. 2007-048750

### SUMMARY OF THE INVENTION

### PROBLEMS TO BE SOLVED BY THE INVENTION

In the configuration in which the plurality of cells are arranged side by side in one direction, for example when a particular one of the cells generates heat due to overcharge or the like, the heat may be transferred to the other cells placed adjacently to that particular cell. Since the spacer is placed between the two cells adjacent in the arrangement direction, the heat generated in the particular cell is transferred to the other cells through the spacers. In addition, the spacer is typically made of thermoplastic resin and may be melted by the heat from the cell.

It is thus an object of the present invention to provide a power storage apparatus having a configuration including a plurality of power storage components arranged side by side, wherein, even when the temperature suddenly rises in any of the power storage components, the transfer of the heat to the other power storage components placed adjacently to that power storage component can be suppressed.

### [MEANS FOR SOLVING THE PROBLEMS]

According to a first aspect, the present invention provides a power storage apparatus including a plurality of power storage components arranged side by side in a predetermined direction, and a spacer located between the power storage components adjacent in the predetermined direction and in contact with the power storage components. The spacer has a base material formed of resin and a blowing agent held by the base material and thermally decomposed in response to a temperature rise associated with heat generation of the power storage component.

The decomposition temperature of the blowing agent is lower than a temperature when the power storage component is in an abnormal state. This can achieve the thermal decomposition of the blowing agent when the power storage component approaches the abnormal state.

According to a second aspect, the present invention provides a power storage apparatus including a plurality of power storage components arranged side by side in a predetermined direction, a spacer located between the power storage components adjacent in the predetermined direction, and an insulating layer provided between the power storage component and the spacer and in contact with the power storage component and the spacer. The insulating layer has a base material formed of thermosetting resin and a blowing agent held by the base material and thermally decomposed in response to a temperature rise associated with heat generation of the power storage component.

The insulating layer can be a member in sheet form, or the insulating layer can be a film formed by coating to a surface of at least one of the power storage component and the spacer. The spacer can be formed of thermoplastic resin. In this case, the melting of the spacer can be suppressed even when the power storage component extremely generates heat. Even when the spacer is melted, the base material of the insulating layer is formed of thermosetting resin and thus the insulating layer is arranged between the power storage components adjacent in the predetermined direction to allow the prevention of contact of these power storage components.

In the present invention, the spacer can be provided with a protruding portion extending in the predetermined direction and configured to form a path within a plane orthogonal to the predetermined direction, the path where a heat exchange medium performing heat exchange with the power storage component is moved. This enables efficient temperature adjustment of the power storage components. A blowing agent of endothermic decomposition type can be used as the blowing agent. This can absorb heat transferred from the power storage component when the blowing agent is thermally decomposed.

In addition, a support structure can be provided. The support structure supports the power storage components and the spacers by using a force bringing the plurality of power storage components closer to each other in the predetermined direction. This can suppress thermal expansion of the power storage components.

### EFFECT OF THE INVENTION

According to the first aspect of the present invention, when the temperature of the power storage component rises and the heat is transferred to the spacer, the blowing agent can be thermally decomposed to form a space portion in the spacer. This space portion can suppress the transfer of the heat in the spacer to reduce the transfer of the heat to the other power storage components. In addition, since the blowing agent is present in the spacer when the temperature of the power storage components does not rise suddenly, the mechanical strength of the spacer can be ensured.

According to the second aspect of the present invention, when the temperature of the power storage component rises and the heat is transferred to the insulating layer, the blowing agent can be thermally decomposed to form a space portion in the insulating layer. This space portion can suppress the transfer of the heat in the insulating layer to reduce the transfer of the heat to the spacers or the other power storage components. In addition, since the base material of the insulating layer is formed of thermosetting resin, it is possible to prevent contact of the two power storage components between which the insulating layer is sandwiched.

### BRIEF DESCRIPTION OF DRAWINGS

[Fig. 1] A side view showing a battery module which is Embodiment 1 of the present invention.
[Fig. 2] A front view of a spacer in Embodiment 1.
[Fig. 3] A side view showing the configuration of part of the battery module of Embodiment 1.
[Fig. 4] A side view showing the configuration of part of a battery module which is Embodiment 2 of the present invention.
[Fig. 5] A schematic diagram showing the configuration of an insulating sheet in Embodiment 2.
[Fig. 6] A side view showing the configuration of part of a battery module which is a modification of Embodiment 2.
[Fig. 7] A diagram showing the outer appearance of a cell surrounded by an insulating film in the modification of Embodiment 2.

### EMBODIMENTS OF THE INVENTION

Embodiments of the present invention will hereinafter be described.

### Embodiment 1

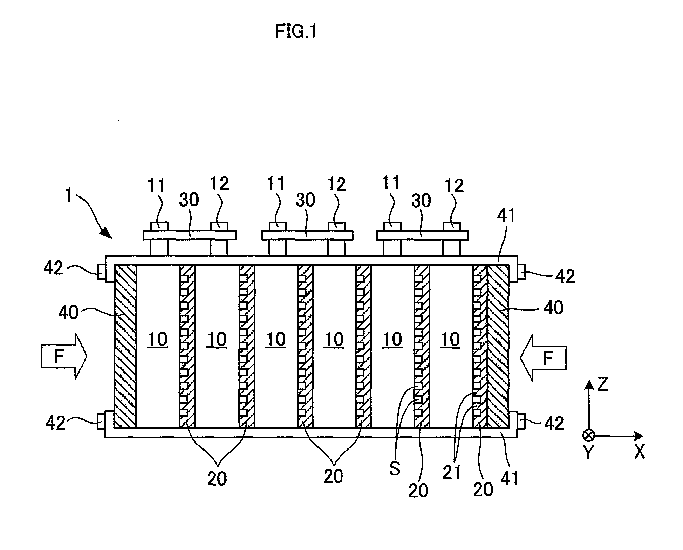

A battery module (power storage apparatus) which is Embodiment 1 of the present invention will be described with reference to Fig. 1. Fig. 1 is a side view showing the configuration of the battery module of the present embodiment. In Fig. 1, an X axis, a Y axis, and a Z axis represent axes orthogonal to each other, and the Z axis is defined as an axis corresponding to a vertical direction in the present embodiment. This applies to the figures other than Fig. 1.

The battery module 1 has a plurality of cells (power storage components) 10. The plurality of cells 10 are arranged side by side in the X direction. A spacer 20 is placed between the two cells 10 adjacent to each other in the X direction. In the present embodiment, as shown in Fig. 1, the spacer 20 is also placed between the cell 10 located at one end of the battery module 1 (the right end in Fig. 1) and an end plate 40, later described.

A secondary battery such as a lithium-ion battery or a nickel metal hydride battery can be used as the cell 10. Alternatively, an electric double layer capacitor (condenser) can be used instead of the secondary battery.

Each of the cells 10 is formed of a cell case and a power generating element (not shown) accommodated by the cell case. The cell case is made of metal. The power generating element is an element which can perform charge and discharge, and a known configuration can be used as appropriate therefor. Specifically, the power generating element can be provided by laminating a positive electrode component, a separator containing a liquid electrolyte, and a negative electrode component in this order. Each of the positive electrode component and the negative electrode component is formed of a collector plate and an active material layer formed on the surface of the collector plate. The active material is provided by using a material suitable for the positive electrode or the negative electrode.

A positive electrode terminal (electrode terminal) 11 and a negative electrode terminal (electrode terminal) 12 are provided on the top of each of the cells 10. The positive electrode terminal 11 and the negative electrode terminal 12 are placed side by side in the Y direction in each of the cells 11, and Fig. 1 shows only one of the electrode terminals in each of the cells 10. The positive electrode terminal 11 is electrically and mechanically connected to the positive electrode component of the power generating element described above. The negative electrode terminal 12 is electrically and mechanically connected to the negative electrode component of the power generating element described above.

The positive electrode terminal 11 in the cell 10 is electrically connected to the negative electrode terminal 12 in the cell 10 placed adjacently to the former cell 10 through a bus bar 30. Similarly, the negative electrode terminal 12 in the cell 10 is electrically connected to the positive electrode terminal 11 in the cell 10 placed adjacently to the former cell 10 through the bus bar 30. The plurality of cells 10 constituting the battery module 1 are connected electrically in series.

The positive electrode terminal 11 of one of the plurality of cells 10 serves as a general positive terminal of the battery module 1. The negative electrode terminal 12 of another one of the cells 10 serves as a general negative terminal of the battery module 1. The general positive terminal and the general negative terminal are connected to a general positive cable and a general negative cable for performing charge and discharge of the battery module 1, respectively.

The number of the cells 10 can be set as appropriate. Specifically, for providing desired output from the battery module 1, the number of the cells 10 can be set on the basis of the output value (voltage value) of the battery module 1.

A safety valve can be provided on the top of each of the cells 10, although not shown. The safety valve is used for discharging gas generated inside the cell 10 (generated from the power generating element) to the outside of the cell 10. For example, if the cell 10 is overcharged, high-temperature gas may be generated from the power generating element of the cell 10. Thus, the gas can be discharged to the outside of the cell 10 through the safety valve in order to suppress expansion or the like of the cell 10 (the cell case) due to the gas.

The cell 10 is formed in square shape and has six faces. Specifically, the cell 10 has an upper face, a lower face, two first side faces, and two second side faces. The first side faces refer to the side faces of the cell 10 that constitute Y-Z planes. The second side faces refer to the side faces of the cell 10 that constitute X-Z planes. The first side faces of the cell 10 are in contact with the spacers 20.

Out of the plurality of cells 10 constituting the battery module 10, the cell 10 located at the other end in the X direction (the left end in Fig. 1) has the two first side faces, only one of which is in contact with the spacer 20. The other first side face is in contact with the end plate 40, later described.

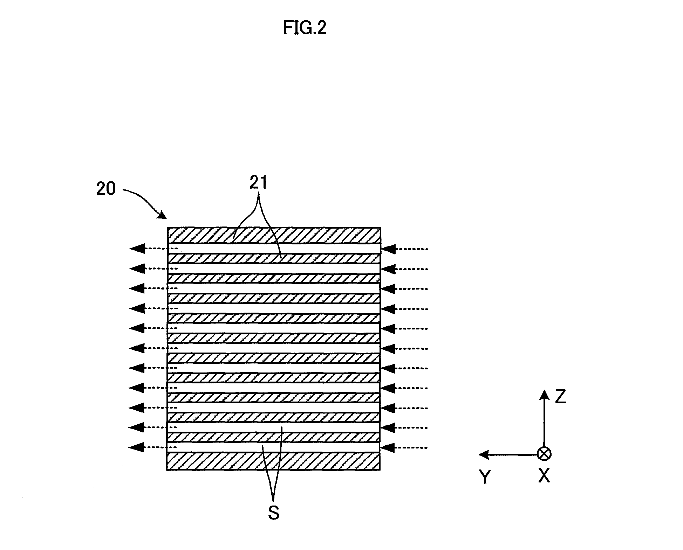

The spacer 20 has a plurality of protruding portions 21. As shown in Fig. 2, each of the protruding portions 21 extends in the Y direction from one end to the other end of the spacer 20. The plurality of protruding portions 21 are provided at predetermined intervals in the Z direction. Fig. 2 is a front view of the spacer 20 when it is viewed from the X direction.

The spacer 20 is sandwiched between two cells 10, and the tips of the protruding portions 21 are in contact with the first side face of one of those cells 10. The surface of the spacer 20 that is opposite in the X direction to the surface having the protruding portions 21 formed thereon is formed of a planar surface and is in contact with the first side face of the other cell 10. The spacer 20 located at the one end of the battery module 1 (the right end in Fig. 1) is sandwiched between the cell 10 and the end plate 40 and is in contact with the cell 10 and the end plate 40.

The contact of the protruding portions 21 with the first side face of the cell 10 forms space S between the first side face of the cell 10 and the spacer 20. The space S serves as a flow path for passing a heat exchange medium (gas) supplied to the battery module 1. Arrows indicated by dotted lines in Fig. 2 represent the moving directions of the heat exchange medium.

While the protruding portions 21 extending in the Y direction are used in the present embodiment, the present invention is not limited thereto. The shape and the number of the protruding portions 21 can be set as appropriate. It is essential only that the protruding portions 21 can form the space through which the heat exchange medium can be moved as described above.

The cell 10 may generate heat due to charge and discharge or the like. The cell 10 shows desired battery characteristics (characteristics about charge and discharge) within a predetermined temperature range, and if the temperature of the cell 10 falls outside the predetermined temperature range, the battery characteristics may be deteriorated. For this reason, the cell 10 needs to be heated or cooled depending on the temperature of the cell 10. Specifically, the temperature of the cell 10 can be adjusted by supplying the heat exchange medium (gas) such as air to the battery module 1.

When the heat exchange medium is introduced into the abovementioned space S, the heat exchange medium comes into contact with the cell 10 to perform heat exchange with the cell 10. This can adjust the temperature of the cell 10. Specifically, when the cell 10 generates heat, the cooled heat exchange medium is brought into contact with the cell 10 to allow suppression of a temperature rise in the cell 10. On the other hand, when the cell 10 is cooled, the heated heat exchange medium is brought into contact with the cell 10 to allow suppression of a temperature drop in the cell 10.

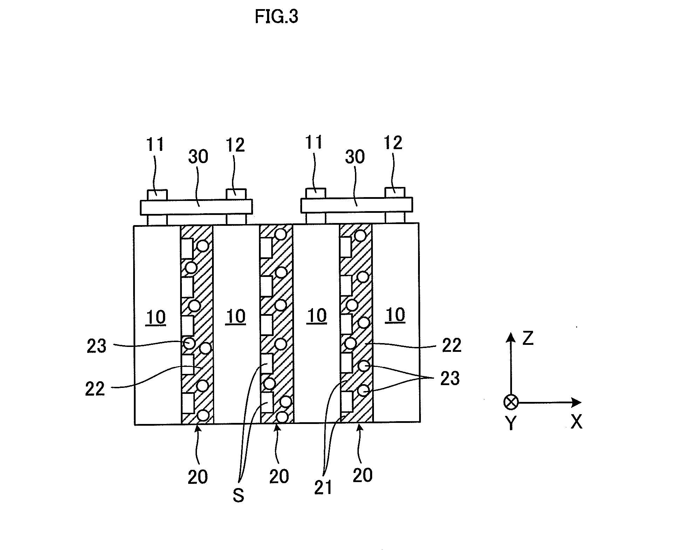

In the present embodiment, the spacer 20 has a base material 22 made of resin and a blowing agent 23 embedded in the base material 22 as shown in Fig. 3. A thermosetting resin or a thermoplastic resin can be used as the resin forming the base material 22. Examples of the thermosetting resin include phenol resin, epoxy resin, melamine resin, urea resin, unsaturated polyester resin, alkyd resin, polyurethane, and thermosetting polyimide. Examples of the thermoplastic resin include polyethylene, polypropylene, polychlorinated vinyl, and polystyrene.

The blowing agent 23 is fixed, in an unfoamed state, to the interior or the surface of the base material 22. In other words, the base material 22 holds the blowing agent 23. The blowing agent 23 can be provided only on the surface of the base material 22 or can be provided only inside the base material 22. The unfoamed state refers to the state in which the blowing agent 23 is not completely decomposed thermally, and in other words, to the state in which a space portion (recessed portion or hole portion) can be formed in the base material 22 by generation of gas associated with thermal decomposition.

Any material that is thermally decomposed at a predetermined temperature can be used for the blowing agent 23 as described later, and it is possible to use an organic blowing agent, an inorganic blowing agent, or a mixture thereof. Examples of the organic blowing agent include dinitrosopentamethylenetetramine, azodicarbonamide, p,p'-oxybis(benzenesulfonylhydrazide), and hydrazodicarbonamide. Examples of the inorganic blowing agent include sodium hydrogen carbonate and ammonium carbonate.

When the thermoplastic resin is used as the material of the base material 22, the blowing agent 23 can be previously mixed into the thermoplastic resin before the spacer 20 is shaped into the predetermined form (the form shown in Figs. 1 and 2) or the blowing agent 23 can be mixed into the thermoplastic resin in the course of shaping of the spacer 20. When the blowing agent 23 is previously mixed into the thermoplastic resin, the decomposition temperature of the blowing agent 23 is preferably higher than the shaping temperature of the thermoplastic resin. On the other hand, if the decomposition temperature of the blowing agent 23 is lower than the shaping temperature of the thermoplastic resin, the blowing agent 23 can be mixed during the course of cooling of the thermoplastic resin formed in the predetermined shape.

On the other hand, when the thermosetting resin is used as the material of the base material 22, the blowing agent 23 can be previously mixed into the thermosetting resin before the spacer 20 is shaped into the predetermined form, and the thermosetting resin containing the blowing agent 23 can be shaped into the form of the spacer 20.

The volume ratio of the base material 22 and the blowing agent 23 can be set as appropriate. If the volume of the blowing agent 23 occupying in the spacer 20 is significantly larger than the volume of the base material 22 occupying in the spacer 20, the base material 22 may not hold the blowing agent 23.

In Fig. 1, a pair of end plates (part of a support structure) 40 are placed at both ends of the battery module 1 in the X direction. The end plate 40 is formed of resin. One of the pair of end plates 40 is in contact with the cell 10, and the other end plate 40 is in contact with the spacer 20. Restraint members (part of the support structure) 41 extending in the X direction are fixed to the pair of end plates 40. Specifically, one end of each of the restraint members 41 is fixed to the one of the end plates 40 through a bolt 42, and the other end of each of the restraint members 41 is fixed to the other end plate 40 through a bolt 42.

In the present embodiment, the two restraint members 41 are placed on an upper surface of the battery module 1 and the two restraint members 41 are placed on a lower surface of the battery module 1. Fig. 1 shows one of the restraint members 41 that is placed on each of the upper surface and the lower surface of the battery module 1. The restraint member 41 can be formed of metal or resin. When the restraint member 41 formed of metal is used, the restraint member 41 is preferably placed separately from the cells 10.

With the abovementioned configuration, forces (restraint forces) indicated by arrows F in Fig. 1 are applied from the pair of end plates 40 to the plurality of cells 10 and the spacers 20 arranged side by side in the X direction. The forces F serve as the forces which allow the pair of end plates 40 to support the plurality of cells 10 and the spacers 20 sandwiched between the end plates 40. Each of the cells 10 is subjected to the forces F to come into close contact with the spacers 20 or the end plate 40.

The structure for supporting the plurality of cells 10 and the spacers 20 is not limited to the structure shown in Fig. 1. Any structure can be used as long as the forces indicated by the arrows F in Fig. 1 are applied to the plurality of cells 10 and the spacers 20. Specifically, the shape and the number of the restraint members 41, and the position where the restraint members 41 are placed can be set as appropriate.

The battery module 1 described above is accommodated by a pack case (not shown), so that a battery pack is provided. The battery module 1 is fixed to the pack case. A plurality of battery modules 1 can be placed side by side within the pack case. The battery pack can be mounted on a vehicle. Examples of the vehicle include a hybrid vehicle and an electric vehicle. The hybrid vehicle refers to a vehicle which is provided not only with the battery pack as a power source but also with another power source such as an internal combustion engine or a fuel battery. The electric vehicle refers to a vehicle which runs only with the output from the battery pack. The battery pack in the present embodiment is discharged to output energy for use in running of the vehicle or is charged with kinetic energy generated in braking of the vehicle as regenerative power. The battery pack can be charged with power supplied from the outside of the vehicle.

Next, description will be made of the case where one of the plurality of cells 10 excessively generates heat (abnormal heat generation) in the battery module 1 of the present embodiment. The abnormal heat generation refers to a sudden rise in temperature of the cell 10 due to overcharge or the like. When gas is generated from the power generating element within the cell 10, the temperature of the cell 10 may rise suddenly.

When one of the plurality of cells 10 constituting the battery module 1 abnormally generates heat, the temperature of the spacer 20 in contact with that cell 10 also rises. Since the blowing agent 23 is contained in the spacer 20, the blowing agent 23 is thermally decomposed when the temperature of the spacer 20 becomes higher than the decomposition temperature of the blowing agent 23.

When the thermal decomposition of the blowing agent 23 generates gas, a space portion (recessed portion or hole portion) is formed at the point where the blowing agent 23 was located. Air or the like is present in the space portion of the spacer 20. Since the air has a thermal conductivity lower than the thermal conductivity of the resin forming the base material 22 of the spacer 20, it is possible to suppress the transfer of the heat of the cell 10 abnormally generating heat to the other cells 10 through the spacer 20.

It is conceivable that the abovementioned space portion may be previously formed in the spacer 20 in order to suppress the transfer of the heat of the cell 10 to the other cells 10 through the spacer 20. In this case, however, the space 20 cannot have sufficient mechanical strength.

For example, when the restraint forces F (see Fig. 1) are applied to the cells 10 and the spacers 20 as in the battery module 1 of the present embodiment, the spacers 20 need to perform their functions even when the spacers 20 are subjected to the restraint forces F. The functions of the spacer 20 include the formation of the space S for moving the heat exchange medium to the surface of the cell 10 and the holding of the insulating state of the two cells 10 between which the spacer 20 is sandwiched. Even in a structure in which the restraint forces F are not applied to the cells 10 and the spacers 20, the mechanical strength of the spacers 20 is preferably ensured.

Since the blowing agent 23 is present in the spacer 20 in the state where the cell 10 does not generate heat abnormally in the present embodiment, the mechanical strength of the spacer 20 can be ensured. In this manner, in the battery module 1 of the present embodiment, while the mechanical strength of the spacer 20 is ensured, the space portion can be formed in the spacer 20 to suppress the transfer of the heat only when the cell 10 generates heat abnormally.

To hold the mechanical strength of the spacer 20 after the blowing agent 23 is thermally decomposed, inorganic particles can be contained in the base material 22 of the spacer 20. For example, ceramics such as silica, alumina, and zirconia can be used as the inorganic particles.

When a blowing agent of endothermic decomposition type is used as the blowing agent 23, that blowing agent 23 can absorb heat from the cell 10 abnormally generating heat during the thermal decomposition of the blowing agent 23. This not only can suppress the transfer of the heat of the cell 10 abnormally generating heat to the other cells 10 but also can reduce the amount of heat transferred to the other cells 10. Examples of the blowing agent of endothermic decomposition type include hydrazodicarbonamide and sodium hydrogen carbonate.

When a thermosetting resin is used as the base material 22 of the spacer 20, the spacer 20 can be prevented from being melted even when the spacer 20 is subjected to the heat from the cell 10. Thus, the two cells between which the spacer 20 is sandwiched can be prevented from coming into contact with each other.

In the present embodiment, the temperature of the cell 10 when it is determined that the cell 10 generates heat abnormally can be previously determined, and the material of the blowing agent 23 can be selected on the basis of that temperature. For example, when the temperature of the cell 10 at the time of abnormal heat generation is 300°C, hydrazodicarbonamide can be used as the blowing agent which is thermally decomposed at 245°C lower than that temperature of the cell 10. When the thermosetting resin is used as the base material 22 of the spacer 20, phenol resin or epoxy resin can be used as the resin, for example.

While the blowing agent 23 is contained in each of the spacers 20 forming the battery module 1 in the present embodiment, the present invention is not limited thereto. Specifically, it is essential only that at least one of the plurality of spacers 20 forming the battery module 1 should contain the blowing agent 23. In this case, the abovementioned effects can be achieved in the spacer 20 containing the blowing agent 23. If one of the cells 10 that is likely to generate heat abnormally can be identified, the spacer 20 containing the blowing agent 23 can be placed in contact with that cell 10.

### Embodiment 2

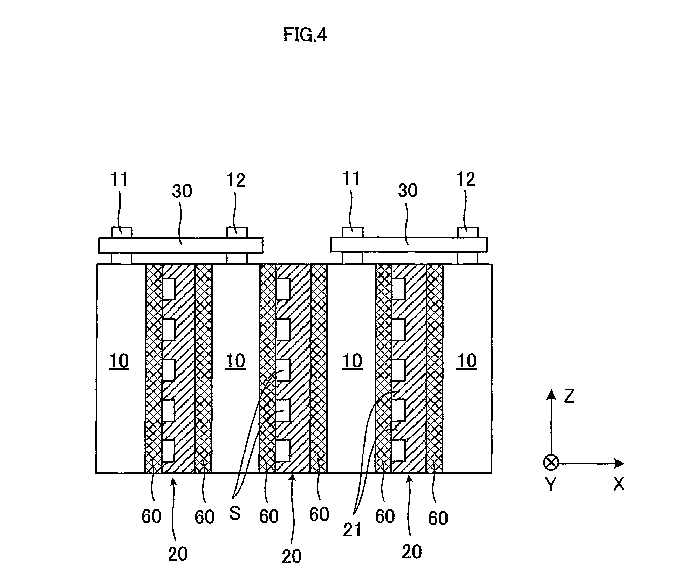

Next, a battery module which is Embodiment 2 of the present invention will be described with reference to Fig. 4. Fig. 4 is a side view showing the configuration of part of the battery module of the present embodiment. Members having the same functions as those of the members described in Embodiment 1 are designated with the same reference numerals and detailed description thereof is omitted. In the following, different points from those in Embodiment 1 will be described mainly.

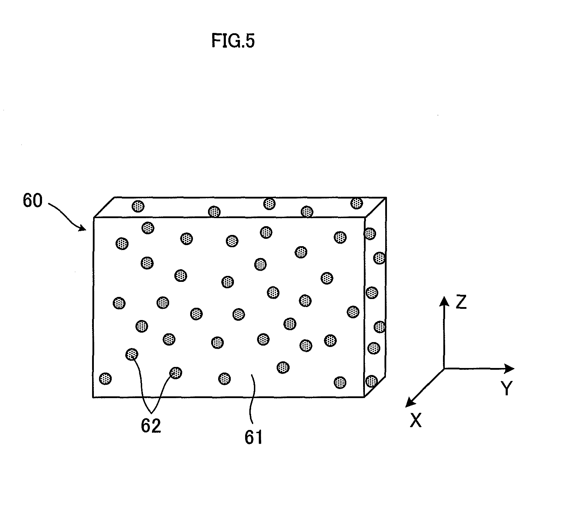

In the present embodiment, an insulating sheet 60 is placed between a spacer 20 and a cell 10, in other words, between cells 10 adjacent to each other in an X direction. The insulating sheet 60 is in contact with the spacer 20 and the cell 10 and is formed to have substantially the same size as that of the spacer 20 when the insulating sheet 60 is viewed from the X direction. As shown in Fig. 5, the insulating sheet 60 has a base material 61 formed of thermosetting resin and a blowing agent 62 embedded in the base material 61.

The blowing agent 62 is unfoamed similarly to the case described in Embodiment 1. The blowing agent 62 can be provided in at least one of the surface and the interior of the base material 61. The materials described in Embodiment 1 can be used as the thermosetting resin and the blowing agent 62. In the present embodiment, the spacer 20 contains no blowing agent and is made of resin.

When any of the cells 10 generates heat abnormally in the battery module of the present embodiment, the heat of the cell 10 is transferred to the insulating sheet 60. When the temperature of the insulating sheet 60 becomes higher than the decomposition temperature of the blowing agent 62, the blowing agent 62 is thermally decomposed to form a space portion (recessed portion or hole portion) in the insulating sheet 60. The formation of the space portion can suppress the transfer of the heat of the cell 10 abnormally generating heat to the spacers 20 or the other cells 10.

Since the heat of the cell 10 abnormally generating heat is not easily transferred to the spacer 20, it is possible to suppress melting of the spacer 20 due to the heat of the cell 10 even when the spacer 20 is made of thermoplastic resin. In other words, the functions of the spacer 20 can be maintained. On the other hand, even when the spacer 20 is melted, the base material 61 of the insulating sheet 60 is formed of thermosetting resin and thus the insulating sheet 60 is present between the two cells 10 between which the spacer 20 is sandwiched. Thus, the insulating sheet 60 can prevent the two cells 10 from coming into contact with each other. Even when the spacer 20 is melted, the heat from the cell 10 abnormally generating heat can be absorbed during the melting of the spacer 20.

When a blowing agent of endothermic decomposition type is used as the blowing agent 62 of the insulating sheet 60, that blowing agent 62 can absorb heat from the cell 10 abnormally generating heat during the thermal decomposition of the blowing agent 62. This not only can suppress the transfer of the heat of the cell 10 abnormally generating heat to the other cells 10 but also can reduce the amount of heat transferred to the other cells 10.

The insulating sheet 60 is placed at each of the positions sandwiched between the cell 10 and the spacer 20 in the present embodiment, the present invention is not limited thereto. In other words, the insulating sheet 60 can be placed only between a particular cell 10 and an associated spacer 20. The thickness (the length in the X direction) of the insulating sheet 60 and the shape of the insulating sheet 60 when it is viewed from the X direction can be set as appropriate.

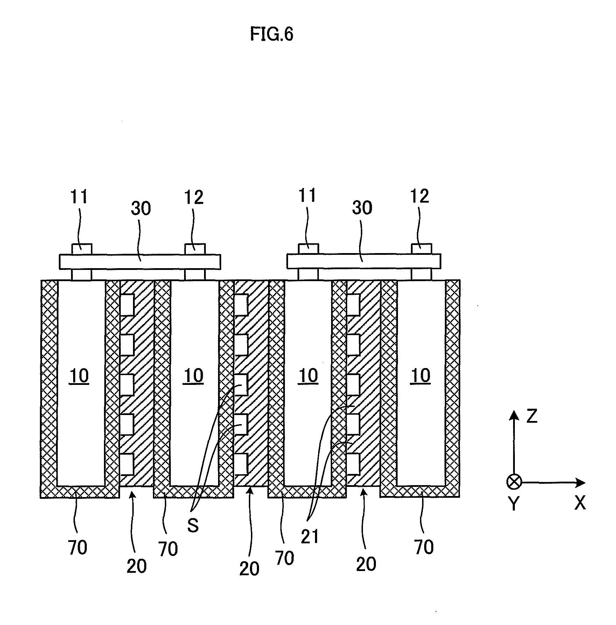

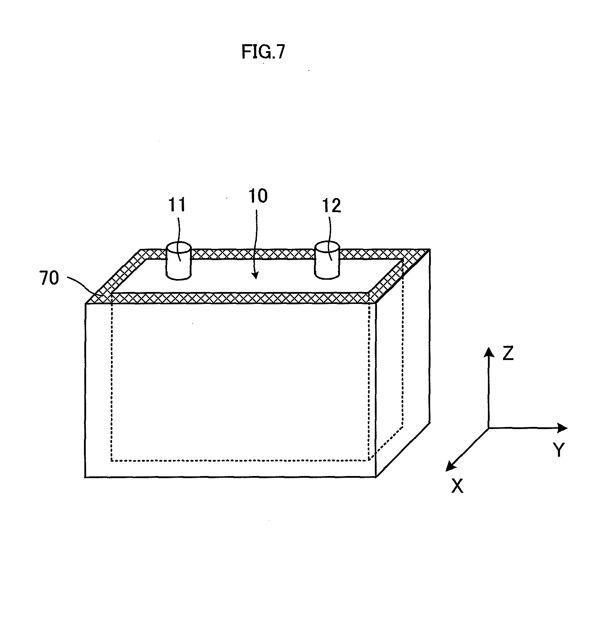

Next, a modification of the present embodiment will be described with reference to Figs. 6 and 7. Fig. 6 is a side view showing the configuration of part of a battery module which is the present modification, and Fig. 7 is a perspective view of the outer appearance of a cell used in the present modification. Members having the same functions as those of the members described in Embodiment 1 are designated with the same reference numerals and detailed description thereof is omitted. In the following, different points from those in the present embodiment will be described.

In the present modification, an insulating film 70 containing dispersed blowing agent and made of thermosetting resin is formed by performing coating to outer surfaces of a cell 10. The blowing agent contained in the insulating film 70 is unfoamed similarly to the present embodiment. As shown in Fig. 7, the insulating film 70 is formed on the outer surfaces of the cell 10 other than the outer surface on which the positive electrode terminal 11 and the negative electrode terminal 12 are provided. Alternatively, the insulating film 70 can also be formed on the outer surface on which the positive electrode terminal 11 or the like is provided.

Since the insulating film 70 also contains the blowing agent in the present modification, the blowing agent can be thermally decomposed to form a space portion in the insulating film 70 when the cell 10 generates heat abnormally. Such formation of the space portion can suppress the transfer of the heat of the cell abnormally generating heat to the spacers 20 and the other cells 10.

While the insulating film 70 is formed on the outer surfaces of the cell 10 except for the upper surface in the present modification, the present invention is not limited thereto. Specifically, it is essential only that the transfer of the heat of the cell 10 abnormally generating heat to the other cells 10 should be suppressed and that the insulating film 70 should be located on the path where the heat moves. For example, the insulating film 70 can be formed on the surface (part or all thereof) of the cell 10 opposite to the spacer 20.

The insulating film 70 is formed on the outer surfaces of the cell 10 in the present modification. Alternatively or additionally to the configuration, the insulating film 70 containing the blowing agent can be formed on outer surfaces of the spacer 20. In this case, the insulating film 70 can be formed in all surfaces or part of the area of the spacer 20. Specifically, the insulating film 70 can be formed in the tip area of protruding portions 21 of the spacer 20 or the insulating film 70 can be formed on the surface of the spacer 20 opposite to the surface on which the protruding portions 21 are formed. In other words, it is essential only that the insulating film 70 should be formed on the heat transfer path between two cells 10 placed such that the spacer 20 is sandwiched between them.

In the present embodiment or the present modification, the spacer 20 can be formed to have the configuration described in Embodiment 1. In addition, the thickness of the insulating film 70 can be set as appropriate based on the size of the blowing agent or the like.

## Claims

1. A power storage apparatus comprising:
a plurality of power storage components arranged side by side in a predetermined direction; and
a spacer located between the power storage components adjacent in the predetermined direction and in contact with the power storage components,
wherein the spacer has a base material formed of resin and a blowing agent held by the base material and thermally decomposed in response to a temperature rise associated with heat generation of the power storage component.

2. The power storage apparatus according to claim 1, wherein a decomposition temperature of the blowing agent is lower than a temperature when the power storage component is in an abnormal state.

3. A power storage apparatus comprising:
a plurality of power storage components arranged side by side in a predetermined direction;
a spacer located between the power storage components adjacent in the predetermined direction; and
an insulating layer provided between the power storage component and the spacer and in contact with the power storage component and the spacer,
wherein the insulating layer has a base material formed of thermosetting resin and a blowing agent held by the base material and thermally decomposed in response to a temperature rise associated with heat generation of the power storage component.

4. The power storage apparatus according to claim 3, wherein the insulating layer is a member in sheet form.

5. The power storage apparatus according to claim 3, wherein the insulating layer is a film formed by coating to a surface of at least one of the power storage component and the spacer.

6. The power storage apparatus according to any one of claims 3 to 5, wherein the spacer is formed of thermoplastic resin.

7. The power storage apparatus according to any one of claims 1 to 6, wherein the spacer has a protruding portion extending in the predetermined direction and configured to form a path within a plane orthogonal to the predetermined direction, the path where a heat exchange medium performing heat exchange with the power storage component is moved.

8. The power storage apparatus according to any one of claims 1 to 7, wherein the blowing agent is a blowing agent of endothermic decomposition type.

9. The power storage apparatus according to any one of claims 1 to 8, further comprising a support structure which supports the power storage components and the spacers by using a force bringing the plurality of power storage components closer to each other in the predetermined direction.
